# EUROPEAN PATENT APPLICATION

(11) **EP 1 914 924 A1**
(43) Date of publication of application: **23.04.2008**
(21) Application number: 06781852.6
(22) Date of filing: 21.07.2006
(51) Int. Cl.: H04L 9/08, H04L 9/14

(54) **TIME APPARATUS, ENCRYPTING APPARATUS, DECRYPTING APPARATUS, AND ENCRYPTING/DECRYPTING SYSTEM**

(30) Priority: 22.07.2005 JP 2005212788
(71) Applicant: NEC Corporation, Minato-ku Tokyo 108-8001 (JP)
(72) Inventor: TERANISHI, Isamu c/o NEC Corporation, Tokyo 1088001 (JP)
(74) Representative: Glawe, Delfs, Moll
(86) International application number: PCT/JP2006/314942
(87) International publication number: WO 2007/011071

(57) **Abstract**

A time apparatus subjects a plurality of IDs to extract algorism. Each of the plurality of IDs is configured from a bit sequence, and the bit sequence is formed by expressing a current time instant as a bit sequence and concatenating a few bits from the first of the bit sequence. The time apparatus produces a plurality of decryption keys obtained as a result of subjecting the plurality of specified IDs to the extract algorism. An encryption apparatus specifies a plurality of IDs. Each of the plurality of IDs is configured from a bit sequence, the bit sequence being formed by expressing the designated time instant as a bit sequence and concatenating a few bits from the first of the bit sequence. The encryption apparatus reads the encryption key and the plurality of IDs supplied from the time apparatus to encrypt same plaintext. The encryption apparatus produces plural pieces of ciphertext. A decryption apparatus selects one decryption key from the inputted plurality of decryption keys, and selects one ciphertext from the inputted plural pieces of ciphertext. The decryption section decrypts the selected ciphertext using the selected decryption key on the basis of an ID based encryption method.

## Description

### Technical Field:

The present invention relates to time-open type encryption/decryption, and particularly, the present invention relates to a time apparatus, an encryption apparatus, a decryption apparatus, an encryption/decryption system, a method, a program, and an information recording media that can execute encryption and decryption in which a calculation amount of a time server does not depend on the number of persons who receive an encrypted message.

### Background Art:

As disclosed in the following prior art documents 1 to 6, a time-open type encryption system is an encryption system in which a ciphertext transmitter can specify a time instant when ciphertext can be decrypted. The ciphertext transmitter sets a decryption time instant to create ciphertext, and transmits the ciphertext to a recipient. The recipient cannot decrypt the ciphertext before the set time instant. However, at the set time instant, the recipient can decrypt the ciphertext without communication with the ciphertext transmitter. Inasmuch as it is possible to control the time instant when secret information is to be released using this encryption system, it can be applied to, for example, electronic voting, vote counting of electronic bidding, and announcement of a drawing result of electronic drawing.

Prior art document 1: lan F. Blake, Vladimir Kolesnikov, "Strong Conditional Oblivious Transfer and Computing on Intervals", In Advances in Cryptology-ASIACRYPT 2004, vol. 3329 of LNCS, pp. 515-529, Springer-Verlag, 2004.

Prior art document 2: D. Boneh and M. Franklin, "Identity-Based Encryption from the Weil Pairing", SIAM J. of Computing, Vol. 32, No. 3, pp. 586-615, 2003.

Prior art document 3: Dan Boneh and Xavier Boyen, "Secure Identity Based Encryption Without Random Oracles", In Advances in Cryptology (CRYPTO 2004), vol. 3152 of LNCS, pp. 443-459, Springer-Verlag, 2004.

Prior art document 4: Clifford Cocks, "An Identity Based Encryption Scheme based on Quadratic Residues", In Proceedings of the 8th IMA International Conference on Cryptography and Coding. vol. 2260 of LNCS, pp. 360-363, Springer, 2001.

Prior art document 5: Paulo S. L. M. Barreto, Hae. Y. Kim, Ben Lynn, and Michael Scott, "Efficient Algorithms for Pairing-Based Cryptosystems", In Advances in Cryptology - Crypto 2002, Lecture Notes on Computer Science 2442, Springer-Verlag (2002), pp. 354-368.

Prior art document 6: Ronald L. Rivest, Adi Shamir, and David A. Wagner, "Time-lock puzzles and timed-release Crypto", LCS technical memo MIT/LCS/TR-684, 1996. http://theory.lcs.mit.edu/~rivest/publications.html

### Disclosure of Invention:

### Problems to be solved by the Invention

However, in the case of a time-open type encryption system proposed in the prior art document 1 described above, a ciphertext recipient must intercommunicate with a third-party organization called as a time server when to decrypt the ciphertext. For this reason, load is concentrated on the time server, and the time server must execute the calculation amount in proportion to the number of ciphertext recipients. From a viewpoint of efficiency, it is desired that the calculation amount of the time server does not depend on the number of ciphertext recipients.

Further, in the case of a time-open type encryption system proposed in the prior art document 6 described above, a ciphertext recipient does not fail to receive data that the time server transmits on a designated time instant. If the ciphertext recipient fails to receive the data, the ciphertext cannot be decrypted.

Needless to say, if the time server transmits the data again, the ciphertext can be decrypted. However, since the number of times of data transmission is increased in a system in which the time server transmits data again, load is still concentrated on the time server.

It is an object of the present invention to execute encryption/decryption in which a calculation amount of a time server does not depend on the number of ciphertext recipients.

### Means of solving the Problems

In order to solve the problems described above, the present invention adopts means of solving the problems that has the following features.

According to a first aspect, a time apparatus according to the present invention includes: a setup section that executes a setup for an ID based encryption method; a decryption key calculating section that subjects a plurality of IDs to extract algorism of the ID based encryption method; and an output section,
wherein each of the plurality of IDs is configured from a bit sequence, and the bit sequence is formed by expressing an inputted current time instant as a bit sequence and concatenating a few bits from the first of the bit sequence, and
wherein the output section outputs a plurality of decryption keys, and the plurality of decryption keys are obtained as a result of subjecting the plurality of specified IDs to the extract algorism.

According to a second aspect, an encryption apparatus according to the present invention includes: an input section to which a designated time instant data is supplied, the designated time instant being the time instant when ciphertext can be decrypted; a key selecting section that specifies a plurality of IDs, each of the plurality of IDs being configured from a bit sequence, the bit sequence being formed by expressing the inputted designated time instant as a bit sequence and concatenating a few bits from the first of the bit sequence; an encrypting section that encrypts same plaintext plural times using the plurality of IDs; and an output section that produces plural pieces of ciphertext, the plural pieces of ciphertext being derived from calculation results of the encrypting section.

According to a third aspect, a decryption apparatus according to the present invention includes: a reception section to which plural pairs of ciphertext and designated time instants and plural pairs of decryption keys and generation time instants of the decryption keys are supplied; a key selecting section for selecting one decryption key from the inputted plurality of decryption keys; a ciphertext selecting section for selecting one ciphertext from the inputted plural pieces of ciphertext; and a decrypting section for decrypting the selected ciphertext using the selected decryption key on the basis of an ID based encryption method,
wherein the key selecting section selects a first bit sequence, and selects a decryption key that corresponds to an ID when the selected first bit sequence is regarded as the ID,
wherein the ciphertext selecting section selects ciphertext that corresponds to the selected first bit sequence, and
wherein the first bit sequence is configured by concatenating 1 to a second bit sequence, the second bit sequence is a bit sequence formed by expressing the designated time instant as a bit sequence and concatenating a few bits from the first of the bit sequence, and at the same time, the second bit sequence is a bit sequence formed by expressing the generation time instant as a bit sequence and concatenating a few bits from the first of the bit sequence.

According to a fourth aspect, a method of creating a decryption key according to the present invention includes:
executing a setup for an ID based encryption method;
subjecting a plurality of IDs to extract algorism of the ID based encryption method, each of the plurality of IDs being configured from a bit sequence, the bit sequence being formed by expressing an inputted current time instant as a bit sequence and concatenating a few bits from the first of the bit sequence; and
producing a plurality of decryption keys, the plurality of decryption keys being obtained as a result of subjecting the plurality of specified IDs to the extract algorism.

According to a fifth aspect, an encryption method according to the present invention includes:
inputting a designated time instant data, the designated time instant being the time instant when ciphertext can be decrypted;
specifying a plurality of IDs, each of the plurality of IDs being configured from a bit sequence, the bit sequence being formed by expressing the inputted designated time instant as a bit sequence and concatenating a few bits from the first of the bit sequence;
encrypting same plaintext plural times using the plurality of IDs; and
producing plural pieces of ciphertext, the plural pieces of ciphertext being derived from calculation results of the encrypting section.

According to a sixth aspect, a decryption method according to the present invention includes:
inputting plural pairs of ciphertext and designated time instants and plural pairs of decryption keys and generation time instants of the decryption keys;
selecting one decryption key from the inputted plurality of decryption keys;
selecting one ciphertext from the inputted plural pieces of ciphertext; and
decrypting the selected ciphertext using the selected decryption key on the basis of an ID based encryption method,
   wherein the selecting one decryption key includes selecting a first bit sequence, and selecting a decryption key that corresponds to an ID when the selected first bit sequence is regarded as the ID,
   wherein the selecting one ciphertext includes selecting ciphertext that corresponds to the selected first bit sequence, and
   wherein the first bit sequence is configured by concatenating 1 to a second bit sequence, the second bit sequence is a bit sequence formed by expressing the designated time instant as a bit sequence and concatenating a few bits from the first of the bit sequence, and at the same time, the second bit sequence is a bit sequence formed by expressing the generation time instant as a bit sequence and concatenating a few bits from the first of the bit sequence.

According to a seventh aspect, a program according to the present invention for causing a computer to execute:
executing a setup for an ID based encryption method;
subjecting a plurality of IDs to extract algorism of the ID based encryption method, each of the plurality of IDs being configured from a bit sequence, the bit sequence being formed by expressing an inputted current time instant as a bit sequence and concatenating a few bits from the first of the bit sequence; and
producing a plurality of decryption keys, the plurality of decryption keys being obtained as a result of subjecting the plurality of specified IDs to the extract algorism.

According to an eighth aspect, a computer-readable information recording medium according to the present invention (including a compact disc, a flexible disk, a hard disk, a magneto-optical disc, a digital video disc, a magnetic tape or a semiconductor memory) records the program.

According to a ninth aspect, an encryption/decryption system according to the present invention includes:
a time apparatus that: subjects a plurality of IDs to extract algorism of an ID based encryption method, each of the plurality of IDs being configured from a bit sequence, and the bit sequence being formed by expressing an inputted current time instant as a bit sequence and concatenating a few bits from the first of the bit sequence; and produces a plurality of decryption keys, the plurality of decryption keys being obtained as a result of subjecting the plurality of specified IDs to the extract algorism;
an encryption apparatus that: specifies a plurality of IDs, each of the plurality of IDs being configured from a bit sequence, the bit sequence being formed by expressing a designated time instant data as a bit sequence and concatenating a few bits from the first of the bit sequence, the designated time instant being the time instant when ciphertext can be decrypted; reads the encryption keys as system parameters supplied from the time apparatus and the plurality of IDs to encrypt same plaintext plural times using the plurality of IDs; and produces plural pieces of ciphertext; and
a decryption apparatus that: inputs the plural pieces of ciphertext and the designated time instants supplied from the encryption apparatus and the plurality of decryption keys and generation time instants of the decryption keys supplied from the time apparatus; selects one decryption key from the inputted plurality of decryption keys; selects one ciphertext from the inputted plural pieces of ciphertext; and decrypts the selected ciphertext using the selected decryption key on the basis of the ID based encryption method.

### Effects of the Invention

According to the present invention, there is an effect that a calculation amount of a time server does not depend on the number of persons who receive an encrypted message. This is because of two following reasons.

A first reason is because in the present invention the time server is not required to intercommunicate with a cipher recipient, unlike the conventional system, and the time server is thus not required to create data depending on every ciphertext recipient.

A second reason is because in the present invention the time server creates one data per each instant of time to transmit the data to all ciphertext recipients using a simultaneous transmissive communication channel, and the data created by the time server are only one data per each time instant without relationship of the number of ciphertext recipients.

Further, according to the present invention, there is an effect that, even though the ciphertext recipient fails to receive a decryption key created by the time server on a decryption time instant designated by the ciphertext transmitter, the ciphertext recipient can decrypt the ciphertext. In addition, there is no need for the time server to retransmit the decryption key. This is because a key required for the decryption can be restored from another decryption key that the time server creates on a time instant after the decryption time instant.

### Brief Description of Drawings:

Fig. 1 is a block diagram showing the structure of an encryption/decryption system according to the present invention;
Fig. 2 is a flowchart showing processing procedures of a time apparatus;
Fig. 3 is a flowchart showing processing procedures of the time apparatus;
Fig. 4 is a flowchart showing processing procedures of an encryption apparatus;
Fig. 5 is a flowchart showing processing procedures of a decryption apparatus; and
Fig. 6 is a flowchart showing processing procedures of each type of algorism applied to the encryption/decryption system of the present invention.

### Best Mode for Carrying Out the Invention:

An embodiment of the present invention will now be described with reference to the accompanying drawings.

An identity (ID) based encryption method is adopted in an encryption/decryption system according to the present invention. Plural kinds of ID based encryption methods are conventionally known. In this regard, for example, the ID based encryption method disclosed in the prior art document 1, the prior art document 2 or the prior art document 3 described above can be utilized as the ID based encryption method of the present invention, but other kinds of ID based encryption methods may also be utilized for the present invention. Hereinafter, four procedures of the ID based encryption method will be called "setup", "extraction", "encryption" and "decryption".

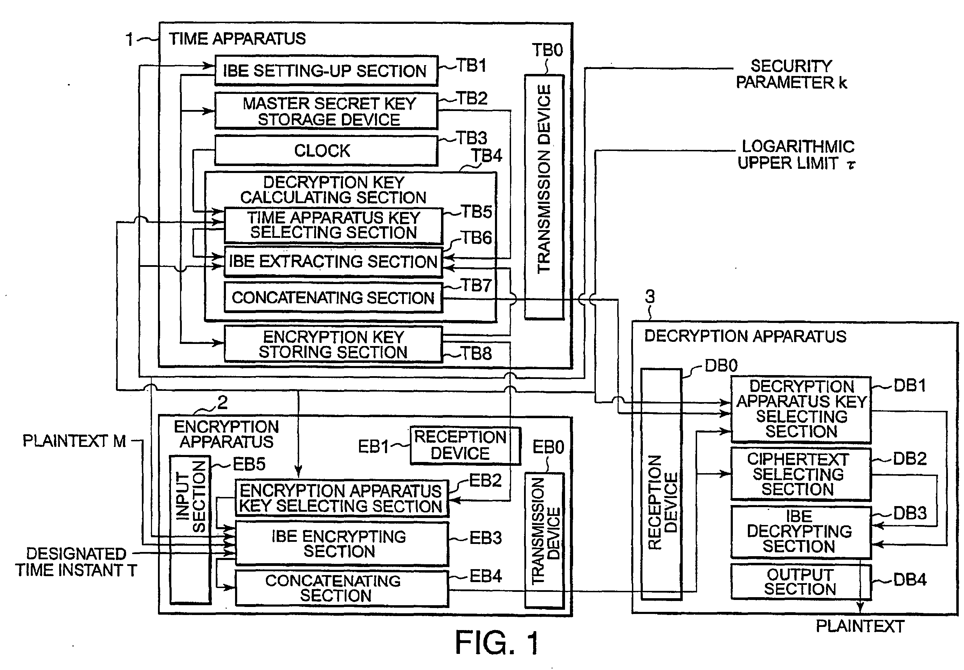

Fig. 1 is a block diagram showing the structure of a time-open type encryption/decryption system according to the present invention. The system is configured by three types of apparatuses including a time apparatus 1, an encryption apparatus 2, and a decryption apparatus 3. The system may be provided with a plurality of time apparatuses 1, a plurality of encryption apparatuses 2, and a plurality of decryption apparatuses 3. Alternatively, one apparatus may have functionalities of two types of apparatuses among them. As the case of the simplest configuration, the system including one time apparatus 1, one encryption apparatus 2, and one decryption apparatus 3 is shown in Fig. 1.

The time apparatus 1 and the encryption apparatus 2 include a transmission device TB0 and a transmission device EB0, respectively. The encryption apparatus 2 and the decryption apparatus 3 include a reception device EB1 and a reception device DB0, respectively. The time apparatus 1 transmits data to the decryption apparatus using radio waves. The encryption apparatus 2 and the decryption apparatus 3 carry out transmission/reception of data using the Internet. Although various mediums such as the Internet, the radio waves, the telephone lines or the like can be utilized as communication means, the system may carry out the transmission/reception using any method.

As shown in Fig. 1, a security parameter "k" and a logarithmic upper limit "τ" are previously distributed to the time apparatus 1, the encryption apparatus 2, and the decryption apparatus 3. The security parameter "k" is, for example, a logarithm of the number of elements of a finite group or the like. A pairing "(G_1, G_2, H, q, <·,·>)" is also previously distributed to each of the apparatuses 1, 2, and 3. In the pairing "(G_1, G_2, H, <·,·>)", "G_1,G_2,H" is a finite group having the same order "q", "<·,·>" indicates mapping from "G_1 x G_2" to "H", and "<g^x, h^y> = <g, h>^{xy}" is established for arbitrary "g, h, x, y". The pairing can be generated in accordance with, for example, the method disclosed in the prior art document 5. In this case, a cyclic group of the order "q" is represented as "Z_q" in the following description.

The security parameter "k", the logarithmic upper limit "τ", plaintext "M" and a designated time instant "T" may be supplied by means of any method in Fig. 1. As the input method, for example, a human may use a computer to input manually, a computer may generate internally, or data may be obtained over the Internet.

The time apparatus 1 requires an input of a current time instant for its operation. As shown in Fig. 1, the time apparatus 1 comprises a clock TB3 to know the current time instant therein. In this regard, an external clock device may be connected to the time apparatus 1 so as to obtain the current time instant externally.

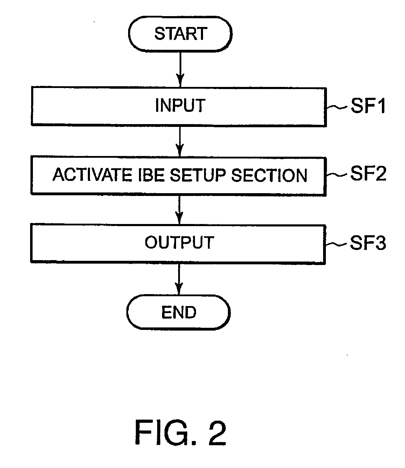

An operation of the time apparatus 1 will now be described with reference to Figs. 1 to 3. To start with, the time apparatus 1 operates in accordance with a flowchart of Fig. 2. The security parameter "k" is first supplied into an IBE setting-up section TB1 of the time apparatus 1, and read therein (Step SF1). Subsequently, the time apparatus 1 activates the IBE setting-up section TB1 (Step SF2). Specifically, when the IBE setting-up section TB1 reads the security parameter "k", the IBE setting-up section TB1 operates setup algorithm of an ID based encryption method, which will be described later in details. The IBE setting-up section TB1 thereby generates an encryption key "EncKey" and a master secret key "MasterSk" as system parameters.

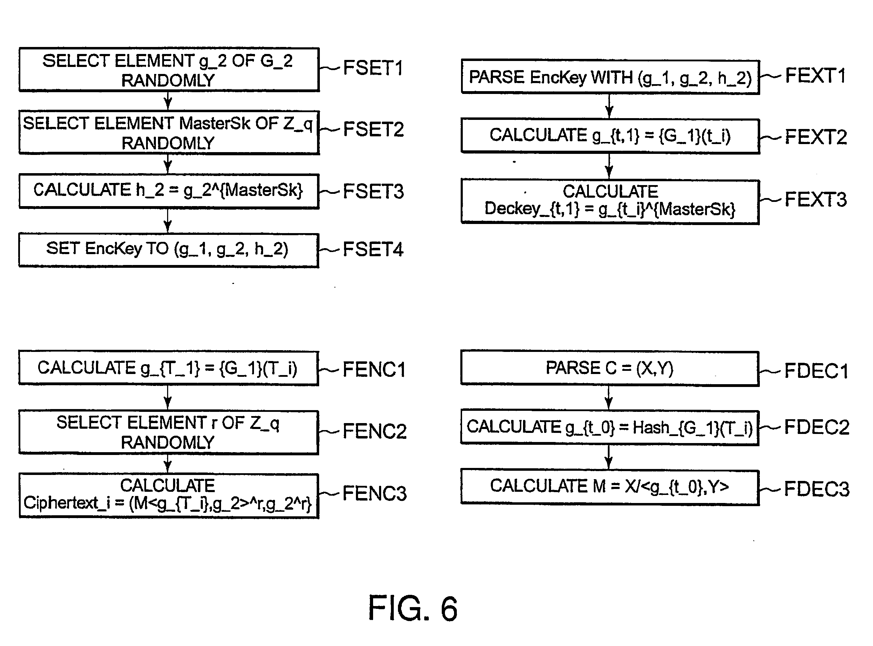

Here, the IBE setting-up section will be described with reference to Fig. 6. The time apparatus 1 first selects an element "g_2" of a finite group "G_2" randomly (Step FSET1 ). Subsequently, the time apparatus 1 randomly selects an element "MasterSk" of the cyclic group "Z_q" (Step FSET2). Subsequently, the time apparatus 1 calculates a formula "h_2 = g_2^{MasterSk}" (Step FSET3). Subsequently, the time apparatus 1 sets an encryption key "EncKey" that meets a formula "EncKey = (g_1, g_2, h_2)" (Step FSET4). Namely, the IBE setting-up section TB1 randomly selects the element "g_2" of the finite group "G_2", randomly selects the master key "MasterSk", calculates a modular exponentiation in which a base is the element "g_2" and an exponent is the master key "MasterSk", and produces an encryption key "(g_1, g_2, h_2)" that is a pair of the element "g_2" and a calculation result of the modular exponentiation. In this case, there are the case where the element "g_1" may be derived from the element "g_2" and the case where the element "g_1" may be newly generated. The element "g_1" may be any one of the cases.

After the processing of the Step SF2, the time apparatus 1 stores the encryption key "EncKey" into an encryption key storing section TB8, and stores the master secret key "MasterSk" into a master secret storage device TB2 (Step SF3).

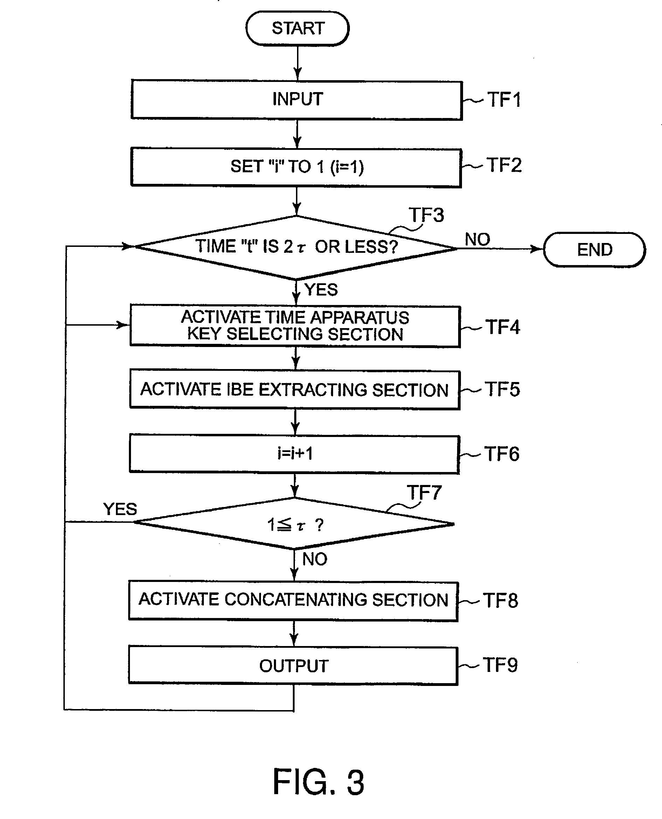

When the above processing steps are terminated, the time apparatus 1 subsequently operates in accordance with a flowchart of Fig. 3. The time apparatus 1 first reads the security parameter "k", the logarithmic upper limit "τ", the encryption key "EncKey", and the master secret key "MasterSk" (Step TF1). Specifically, the security parameter "k" is written into the IBE setting-up section, the logarithmic upper limit "τ" is written into a time apparatus key selecting section TB5, and the master secret key "MasterSk" is written into the master secret key storage device.

Subsequently, the time apparatus 1 set "i" to "1" (Step TF2). Subsequently, the time apparatus 1 reads a current time instant "t" from the clock TB3, and determines whether or not the current time instant "t" is "2^τ" or less (Step TF3). The operation proceeds to Step TF4 if the current time instant "t" is "2^2τ" or less, while the operation is terminated if not.

Subsequently, the time apparatus 1 activates the time apparatus key selecting section (Step TF4). In the time apparatus key selecting section TB5, an "ID" is set as a formula "t_i = a_1∥a_2∥ ... ∥a_{i}. Here, the "a_j" indicates a j^{th}-digit bit from the first of "t" when the "t" is expanded into the binary numeral system. The "ID" is configured from a bit sequence formed by expressing the inputted current time instant as a bit sequence and concatenating a few bits from the first of the bit sequence.

Subsequently, the time apparatus 1 activates an IBE extracting section TB6 (Step TF5). In the IBE extracting section TB6, the "t_i" is supplied as the "ID" to extract algorighm, and the encryption key "EncKey" and the master secret key "MasterSk" are supplied to the extract algorithm as the system parameters to generate "DecKey (Decryption Key)_{t, i}".

Here, the extract algorithm will be described with reference to Fig. 6. The time apparatus 1 parses the "EncKey" with "(g_1, g_2, h_2)" (Step FEXT1 ). In the case where "Hash_{G_1}" is assumed as a Hash function taking a value in "G_1 ", the time apparatus 1 calculates a formula "g_{t_i} = Hash_{G_1}(t_i)" (Step FEXT2). Subsequently, the time apparatus 1 calculates a formula "DecKey_{t,1} = g_{t_i}^{MasterSk}" (Step FEXT3). Namely, the IBE extracting section TB6 associates the inputted current time instant "t" with the element "g_{t_i}" of the finite group that has previously been distributed thereto, calculates the modular exponentiation in which a base is the element "g_{t_i}" and an exponent is the master key "MasterSk", and thereby generates a plurality of decryption keys.

After the processing of Step TF5, the IBE extracting section TB6 adds 1 to "i" (Step TF6). Subsequently, the IBE extracting section determines whether or not i is "τ" or less (Step TF7). The operation returns to the Step TF3 if the "i" is "τ" or less, while the operation proceeds to Step TF8 if not. Subsequently, the time apparatus 1 activates a concatenating section TB7 (Step TF8).

The concatenating section TB7 sets "DecKey_t" so as to meet a relational formula "DecKey_t = (DecKey_{t, 1}, ..., Deckey_{t, τ})". The concatenating section TB7 delivers a pair (t, Deckey_t) of the current time instant "t" and the "DecKey_t" to the decryption apparatus 3, which will be described later, via the transmission device TB0 (Step TF9). The operation returns to the Step TF3.

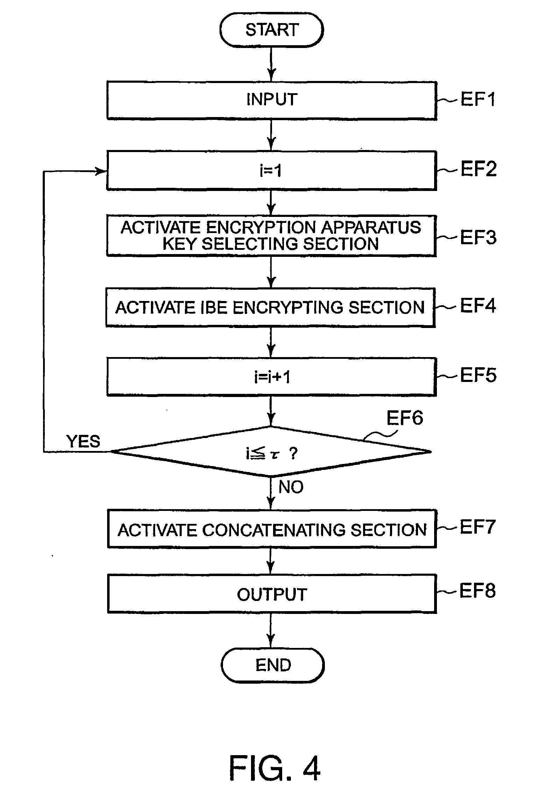

Subsequently, the operation of the encryption apparatus 2 will be described with reference to Figs. 1 and 4. The security parameter "k", the encryption key "EncKey", the designated time instant "T" and the plaintext "M" are supplied to the encryption apparatus 2 to read them (Step EF1). Subsequently, the encryption apparatus 2 sets "i" to 1 (Step EF2).

Subsequently, the encryption apparatus 2 activates an encryption apparatus key selecting section EB2 (Step EF3). In the encryption apparatus key selecting section EB2, an "ID" is set to "T_i = b_1∥b_2∥ ... ∥b_{i-1}∥1". Here, the "b_j" indicates a j^{th}-digit bit from the first of "t" when the "t" is expanded into the binary numeral system, and "T" indicates the designated time instant. Subsequently, the encryption apparatus 2 activates an IBE encrypting section EB3 (Step EF4). Specifically, the IBE encrypting section EB3 supplies the "T_i" as the "ID", the encryption key "EncKey" as the system parameter, and "M" as the plaintext to encryption algorithm of the ID based encryption. The encryption algorithm is subjected to the supplied data to generate ciphertext (Ciphertext_i).

Here, the encryption algorithm will be described with reference to Fig. 6. The encryption apparatus 2 first calculates a formula "g_{T_i} = Hash_{G_1}(T_i)" (Step FENC1). Subsequently, the encryption apparatus 2 randomly selects an element "r" of "z_q" (Step FENC2). Subsequently, the encryption apparatus 2 calculates a formula "Ciphertext_i = (M<g_{T,I}, g_2>^r, g_2^r)" (Step FENC3). Subsequently, the encryption apparatus 2 sets "i" to "i+1" (Step EF5). Namely, the IBE encrypting section EB3 associates the element "g_{T_i}" of the finite group with the "ID", randomly selects the arbitrary random number "r", raises the pairing of the element "g_{T_i}" and a component "g_2" of a public key to the power of the random number "r", and multiplies the result by the plaintext "M" to obtain a first calculation result. Subsequently, the IBE encrypting section EB3 raises the component "g_2" of the public key to the power of the random number "r" to obtain a second calculation result. The IBE encrypting section EB3 sets the pair of the first and second calculation results (M<g_{T_i}, g_2>^r ,g 2^r) as the ciphertext. In this case, the "g_{T_i}" is an element of the finite group. The "g_2" is an element of the finite group "G_2" and is also a component of the public key.

Subsequently, the IBE encrypting section EB3 sets "i" to "i+1" (Step EF5), and determines whether or not "i" is "τ" or less (Step EF6). The operation proceeds to the Step EF2 if "i" is "τ" or less, while the operation proceeds to Step EF7 if "i" is not "τ" or less.

Subsequently, the encryption apparatus 2 activates a concatenating section EB4 (Step EF7). The concatenating section EB4 sets the ciphertext "Ciphertext" to "(Ciphertext_1, ..., Ciphertext_τ)", and delivers a pair (T, Ciphertext) of the designated time instant "T" and the ciphertext to the decryption apparatus 3 via the transmission device EB0 (Step EF8).

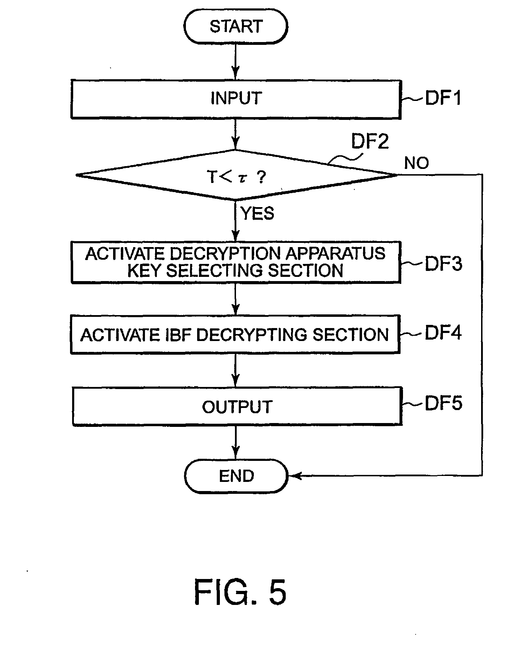

The operation of the decryption apparatus 3 will now be described with reference to Figs. 1 and 5. The decryption apparatus 3 first reads the encryption key "EncKey", the pair (T, Ciphertext) of the designated time instant and the ciphertext, and the pair (t, DecKey_t) of the time instant "t" and a decryption key (Step DF1). Subsequently, the decryption apparatus 3 determines whether or not "T" is less than "t" (Step DF2). The operation proceeds to Step EF3 if "T" is less than "t", while the operation is terminated if "T" is not less than "t".

Subsequently, the decryption apparatus 3 activates a decryption apparatus key selecting section DB1 (Step DF3). The decryption apparatus key selecting section DB1 sets formulas "t_0=a_1∥ ... ∥a_{j_0}∥1", "D = DecKey_{t_0}", where the "a_J" indicates a j^{th}-digit bit from the first of "T" when the "T" is expanded into the binary numeral system, the "b_j" indicates a j^{th}-digit bit from the first of "t" when the "t" is expanded into the binary numeral system, and "j_0" indicates the maximum "j" when "a_j" is equal to "b_j". Namely, the key selecting section DB1 selects a first bit sequence, and selects a decryption key that corresponds to an "ID" when the selected first bit sequence is regarded as the "ID". A ciphertext selecting section DB2 selects ciphertext that corresponds to the selected first bit sequence. Here, the first bit sequence is configured by concatenating "1" to a second bit sequence. The second bit sequence is a bit sequence formed by expressing the designated time instant as a bit sequence and concatenating a few bits from the first of the bit sequence, and at the same time, the second bit sequence is a bit sequence formed by expressing a generation timeinstant as a bit sequence and concatenating a few bits from the first of the bit sequence.

Subsequently, the decryption apparatus 3 activates the ciphertext selecting section DB2 (Step DF3). The ciphertext selecting section sets ciphertext C to be decrypted so as to meet a relational formula "C = Ciphertext_{t_0}". The decryption apparatus 3 activates an IBE decrypting section DB3 (Step DF4). The IBE decrypting section DB3 supplies the encryption key "EncKey" as the system parameter, the "C" as the ciphertext and "D" as a secret key, and executes decryption algorithm for the "ID" based encryption method to generate plaintext "M". Finally, the plaintext "M" is produced by an output section DB4 (Step DF5).

Here, the decryption algorithm will be described with reference to Fig. 6.

The decryption apparatus 3 first parses "C" into "(X, Y)" (Step FDEC1). The decryption apparatus 3 calculates a formula "g_{t_0} = Hash_{G_1}(T_i)" (Step FDEC2). Subsequently, the decryption apparatus 3 calculates a formula "M = X/<g_{t_0}, Y>" (Step FDEC3). Finally, the decryption apparatus 3 produces the plaintext "M" (Step DF5). Namely, the IBE decrypting section DB3 divides the selected ciphertext into a first component "X" and a second component "Y", calculates a pairing of the second component "Y" and an element "g_{t_0}" of the finite group in the present embodiment, and divides the other first component "X" by the calculation result.

Subjects of the present invention may include a program that causes a computer to execute the steps of each of the decryption key generating method, the encrypting method and the decrypting method described above. The program may be a program itself, and may be one stored in a computer-readable recording medium.

In the present invention, a memory itself required to execute processing in a microcomputer, such as a read-only memory (ROM), may be a program medium as a recording medium. Alternatively, a program reading apparatus may be provided as an external storage apparatus (not shown in the drawings), and a recording medium to be inserted into the program reading apparatus may be a readable program medium. In each case, the program stored therein may be configured to be accessed and executed by the microcomputer. Alternatively, in each case, the program stored therein may be a type to be read out and be loaded into a program memory area of the microcomputer so that the loaded program is executed by the microcomputer. Such a program for loading is previously stored in a main apparatus.

Here, the program medium described above is a recording medium that is removable from the main apparatus, and may be a medium to statically hold the programs including: a tape type medium such as a magnetic tape and a cassette tape; a magnetic disk such as a flexible disk (FD) or a hard disk (HD), or an optical disc type medium such as a CD-ROM, a MO disc, a MD and a DVD; a card type medium such as an IC card (including a memory card) and an optical card; or a semiconductor memory such as a mask ROM, an EPROM, an EEPROM and a flash ROM.

Further, inasmuch as the system configuration of the present invention is capable of connection to the communication network such as the Internet, the program medium may be a medium to fluidly hold the programs by downloading them through the communication network. In this regard, in the case where the programs are downloaded through the communication network in this manner, a dedicated program to download the programs may be previously stored in the main apparatus, or may be installed from another recoding medium.

Furthermore, in the present invention, the programs themselves may be procedures executed by the microcomputer, or ones that can be introduced or have been introduced into the main apparatus by accessing the communication network such as the Internet, and ones to be transmitted from the main apparatus.

It should be apparent to those skilled in the art that the embodiment described above is only an example illustrative of the configuration in which the present invention is preferably implemented. Various modifications may be made in the present invention without departing from the spirit and the scope of the present invention.

## Claims

1. A time apparatus comprising a setup section that executes a setup for an ID based encryption method, a decryption key calculating section that subjects a plurality of IDs to extract algorism of the ID based encryption method, and an output section,
wherein each of the plurality of IDs is configured from a bit sequence, and the bit sequence is formed by expressing an inputted current time instant as a bit sequence and concatenating a few bits from the first of the bit sequence, and
wherein said output section produces a plurality of decryption keys, and the plurality of decryption keys are obtained as a result of subjecting the plurality of specified IDs to the extract algorism.

2. The time apparatus according to claim 1, wherein said setup section randomly selects an element of a finite group, randomly selects a master key, calculates a modular exponentiation in which a base is the element and an exponent is the master key, and produces an encryption key that is a pair of the element and a calculation result of the modular exponentiation, and
wherein said decryption key calculating section comprises:
a time apparatus key selecting section for setting the plurality of IDs; and
an IBE extracting section for generating a plurality of decryption keys by associating the inputted current time instant with the element of the finite group that has been previously distributed, and calculating the modular exponentiation in which a base is the element and an exponent is the master key.

3. The time apparatus according to claim 2, further comprising:
a concatenating section that sets i to one and produces the pair of the current time instant and the decryption key in the case where a logarithmic upper limit τ is not one or more.

4. An encryption apparatus comprising:
an input section to which a designated time instant data is inputted, the designated time instant being the time instant when ciphertext can be decrypted;
a key selecting section that specifies a plurality of IDs, each of the plurality of IDs being configured from a bit sequence, the bit sequence being formed by expressing the inputted designated time instant as a bit sequence and concatenating a few bits from the first of the bit sequence;
an encrypting section that encrypts same plaintext plural times using the plurality of IDs; and
an output section that produces plural pieces of ciphertext, the plural pieces of ciphertext being derived from calculation results of said encrypting section.

5. The encryption apparatus according to claim 4, wherein said encrypting section associates an element of a finite group with the ID, randomly selects an arbitrary random number, raises a pairing of the element and a component of a public key to the power of the random number, and multiplies the result by plaintext to obtain a first calculation result; raises the component of the public key to the power of the random number to obtain a second calculation result; and then sets a pair of the first and second calculation results as ciphertext.

6. A decryption apparatus comprising:
a reception section to which plural pairs of ciphertext and designated time instants and plural pairs of decryption keys and generation time instants of the decryption keys are supplied;
a key selecting section for selecting one decryption key from the supplied plurality of decryption keys;
a ciphertext selecting section for selecting one ciphertext from the supplied plural pieces of ciphertext; and
a decrypting section for decrypting the selected ciphertext using the selected decryption key on the basis of an ID based encryption method,
wherein said key selecting section selects a first bit sequence, and selects a decryption key that corresponds to an ID when the selected first bit sequence is regarded as the ID,
wherein said ciphertext selecting section selects ciphertext that corresponds to the selected first bit sequence, and
wherein the first bit sequence is configured by concatenating 1 to a second bit sequence, the second bit sequence is a bit sequence formed by expressing the designated time instant as a bit sequence and concatenating a few bits from the first of the bit sequence, and at the same time, the second bit sequence is a bit sequence formed by expressing the generation time instant as a bit sequence and concatenating a few bits from the first of the bit sequence.

7. The decryption apparatus according to claim 6, wherein said decrypting section divides the selected ciphertext into first and second components, calculates a pairing of any one of the first and second components and an element of a finite group, and divides the other component by a calculation result.

8. A method of creating a decryption key, the method comprising:
executing a setup for an ID based encryption method;
subjecting a plurality of IDs to extract algorism of the ID based encryption method, each of the plurality of IDs being configured from a bit sequence, the bit sequence being formed by expressing an inputted current time instant as a bit sequence and concatenating a few bits from the first of the bit sequence; and
producing a plurality of decryption keys, the plurality of decryption keys being obtained as a result of subjecting the plurality of specified IDs to the extract algorism.

9. The method according to claim 8, wherein said executing the setup includes randomly selecting an element of a finite group, randomly selecting a master key, calculating a modular exponentiation in which a base is the element and an exponent is the master key, and producing an encryption key that is a pair of the element and a calculation result of the modular exponentiation, and
wherein said subjecting the plurality of IDs to the extract algorism includes:
setting the plurality of IDs; and
generating a plurality of decryption keys by associating the inputted current time instant with the element of the finite group that has been previously distributed, and calculating the modular exponentiation in which a base is the element and an exponent is the master key.

10. The method according to claim 9, further comprising:
setting i to 1 and producing the pair of the current time instant and the decryption key in the case where a logarithmic upper limit τ is not 1 or more.

11. An encryption method comprising:
inputting a designated time instant data, the designated time instant being the time when ciphertext can be decrypted;
specifying a plurality of IDs, each of the plurality of IDs being configured from a bit sequence, the bit sequence being formed by expressing the inputted designated time instant as a bit sequence and concatenating a few bits from the first of the bit sequence;
encrypting same plaintext plural times using the plurality of IDs; and
producing plural pieces of ciphertext, the plural pieces of ciphertext being derived from calculation results of said encrypting section.

12. The encryption method according to claim 11, wherein said encrypting includes:
associating an element of a finite group with the ID, randomly selecting an arbitrary random number, raising a pairing of the element and a component of a public key to the power of the random number, and multiplying the result by plaintext to obtain a first calculation result;
raising the component of the public key to the power of the random number to obtain a second calculation result; and
setting a pair of the first and second calculation results as ciphertext.

13. A decryption method comprising:
inputting plural pairs of ciphertext and designated time instants and plural pairs of decryption key and generation time instants of the decryption keys;
selecting one decryption key from the inputted plurality of decryption keys;
selecting one ciphertext from the inputted plural pieces of ciphertext; and
decrypting the selected ciphertext using the selected decryption key on the basis of an ID based encryption method,
wherein said selecting one decryption key includes selecting a first bit sequence, and selecting a decryption key that corresponds to an ID when the selected first bit sequence is regarded as the ID,
wherein said selecting one ciphertext includes selecting ciphertext that corresponds to the selected first bit sequence, and
wherein the first bit sequence is configured by concatenating 1 to a second bit sequence, the second bit sequence is a bit sequence formed by expressing the designated time instant as a bit sequence and concatenating a few bits from the first of the bit sequence, and at the same time, the second bit sequence is a bit sequence formed by expressing the generation time instant as a bit sequence and concatenating a few bits from the first of the bit sequence.

14. The decryption method according to claim 13, further comprising:
dividing the selected ciphertext into first and second components, calculating a pairing of any one of the first and second components and an element of a finite group, and dividing the other component by a calculation result.

15. A program for causing a computer to execute:
executing a setup for an ID based encryption method;
subjecting a plurality of IDs to extract algorism of the ID based encryption method, each of the plurality of IDs being configured from a bit sequence, the bit sequence being formed by expressing an inputted current time instant as a bit sequence and concatenating a few bits from the first of the bit sequence; and
producing a plurality of decryption keys, the plurality of decryption keys being obtained as a result of subjecting the plurality of specified IDs to the extract algorism.

16. A program for causing a computer to execute:
inputting a designated time instant data, the designated time instant being the time instant when ciphertext can be decrypted;
specifying a plurality of IDs, each of the plurality of IDs being configured from a bit sequence, the bit sequence being formed by expressing the inputted designated time instant as a bit sequence and concatenating a few bits from the first of the bit sequence;
encrypting same plaintext plural times using the plurality of IDs; and
producing plural pieces of ciphertext, the plural pieces of ciphertext being derived from calculation results of said encrypting section.

17. A program for causing a computer to execute:
inputting plural pairs of ciphertext and designated time instants and plural pairs of decryption keys and generation time instants of the decryption keys;
selecting one decryption key from the inputted plurality of decryption keys;
selecting one ciphertext from the inputted plural pieces of ciphertext; and
decrypting the selected ciphertext using the selected decryption key on the basis of an ID based encryption method,
wherein said selecting one decryption key includes selecting a first bit sequence, and selecting a decryption key that corresponds to an ID when the selected first bit sequence is regarded as the ID, the first bit sequence is configured by concatenating 1 to a second bit sequence, the second bit sequence is a bit sequence formed by expressing the designated time instant as a bit sequence and concatenating a few bits from the first of the bit sequence, and at the same time, the second bit sequence is a bit sequence formed by expressing the generation time instant as a bit sequence and concatenating a few bits from the first of the bit sequence, and
wherein said selecting one ciphertext includes selecting ciphertext that corresponds to the selected first bit sequence.

18. A computer-readable information recording medium in which the program according to any one of claims 15 to 17 is recorded (including a compact disc, a flexible disk, a hard disk, a magneto-optical disc, a digital video disc, a magnetic tape or a semiconductor memory).

19. An encryption/decryption system comprising:
a time apparatus that: subjects a plurality of IDs to extract algorism of an ID based encryption method, each of the plurality of IDs being configured from a bit sequence, and the bit sequence being formed by expressing an inputted current time instant as a bit sequence and concatenating a few bits from the first of the bit sequence; and producing a plurality of decryption keys, the plurality of decryption keys being obtained as a result of subjecting the plurality of specified IDs to the extract algorism;
an encryption apparatus that: specifies a plurality of IDs, each of the plurality of IDs being configured from a bit sequence, the bit sequence being formed by expressing a designated time instant data as a bit sequence and concatenating a few bits from the first of the bit sequence, the designated time instant being the time instant when ciphertext can be decrypted; reads the encryption keys as system parameters supplied from said time apparatus and the plurality of IDs to encrypt same plaintext plural times using the plurality of lDs; and produces plural pieces of ciphertext; and
a decryption apparatus that: inputs the plural pieces of ciphertext and the designated time instants supplied from said encryption apparatus and the plurality of decryption keys and generation time instants of the decryption keys supplied from said time apparatus; selects one decryption key from the inputted plurality of decryption keys; selects one ciphertext from the inputted plural pieces of ciphertext; and decrypts the selected ciphertext using the selected decryption key on the basis of the ID based encryption method.

20. The encryption/decryption system according to claim 19, wherein the selected decryption key is a decryption key that corresponds to an ID when a first bit sequence is selected and the selected first bit sequence is regarded as the ID,
wherein the selected ciphertext is ciphertext that corresponds to the selected first bit sequence, and
wherein the first bit sequence is configured by concatenating 1 to a second bit sequence, the second bit sequence is a bit sequence formed by expressing the designated time instant as a bit sequence and concatenating a few bits from the first of the bit sequence, and at the same time, the second bit sequence is a bit sequence formed by expressing the generation time instant as a bit sequence and concatenating a few bits from the first of the bit sequence.
